# EUROPÄISCHE PATENTSCHRIFT

(11) **EP 0 567 771 B1**
(45) Veröffentlichungstag und Bekanntmachung des Hinweises auf die Patenterteilung: **10.05.2000**
(21) Anmeldenummer: 93104718.7
(22) Anmeldetag: 23.03.1993
(51) Int. Cl.: H04J 11/00

(54) **Verfahren, Sender und Empfänger zur Informationsdatenübertragung mit veränderlichem Verkehrsaufkommen und Leitstation zur Koordinierung mehrerer solcher Sender und Empfänger**
Method, transmitter and receiver for the transmission of information with a variable traffic flow and a central station for the coordination of the different senders and receivers
Méthode, émetteur et récepteur pour la transmission d'informations avec intensité du trafic variable et une station centrale pour coordonner de tels émetteurs

(30) Priorität: 30.03.1992 DE 4210305
(43) Veröffentlichungstag der Anmeldung: 03.11.1993
(73) Patentinhaber: ALCATEL, 75008 Paris (FR)
(72) Erfinder: Turban, Karl-Albert, W-7250 Leonberg (DE)
(74) Vertreter: Brose, Gerhard, Dipl.-Ing.

(56) Entgegenhaltungen:
- EP-A- 0 164 749
- WO-A-92/00639
- US-A- 4 641 318
- PROCEEDINGS OF VLSI AND COMPUTERS. FIRST INTERNATIONAL CONFERENCE ON COMPUTER TECHNOLOGY, SYSTEMS AND APPLICATIONS. COMPEURO 87 (CAT. NO.87CH2417-4), HAMBURG, WEST GERMANY, 11-15 MAY 1987, ISBN 0-8186-0773-4, 1987, WASHINGTON, DC, USA, IEEE COMPUT. SOC. PRESS, USA, Seiten 767-770, SPRACKLEN C T ET AL 'The application of code division multiplexing techniques to local area networks'
- IEEE COMMUNICATIONS MAGAZINE, MAY 1990, USA, Bd. 28, Nr. 5, ISSN 0163-6804, Seiten 5-14, BINGHAM J A C 'Multicarrier modulation for data transmission: an idea whose time has come'

## Beschreibung

Die Erfindung betrifft ein Verfahren zur Datenübertragung mit veränderlichem Verkehrsaufkommen zwischen einem Sender und einem Empfänger, sowie Sender und Empfänger dafür und eine Leitstation zur Koordinierung mehrerer solcher Sender und Empfänger.

Die zukünftige Telekommunikation wird geprägt durch einen immer weiter zunehmenden Anteil der Nicht-Sprach-Dienste. Charakteristisch für die Nicht-Sprach-Dienste ist ein diskontinuierliches Verkehrsaufkommen. Die für solche Dienste erforderliche Übertragungskapazität ist deshalb nicht konstant. Eine gewisse Zwischenstellung nehmen Videoübertragungen ein. Ausgangspunkt ist das analoge Videosignal, das periodisch abgetastet und zu einem Digitalsignal mit konstantem Datenfluß umgesetzt wird. Abgesehen vom Fernseh-Rundfunk-Dienst, bei dem auch nicht digitalisiert wird, wird das sehr hohe Verkehrsaufkommen von Videosignalen nicht akzeptiert. Mit Hilfe von Videocodecs wird deshalb die in solchen Signalen enthaltene Redundanz mehr oder weniger stark reduziert. Je stärker die Redundanzreduzierung aber ist, desto weniger konstant ist dann das Verkehrsaufkommen. Auch bei Sprachübertragung über Funk spielt die Redundanzreduzierung eine Rolle. Bekannt ist, Sprechpausen zu erkennen und während der Sprechpausen kein Signal zu übertragen.

Eine verbreitete Lösung zur Übertragung von Signalen mit veränderlichem Verkehrsaufkommen liegt darin, daß die Gesamtkapazität eines Übertragungskanals zeitlich in gleich lange Abschnitte (Zeitschlitze, Zellen) unterteilt wird und daß für eine einzelne Übertragung mehr oder weniger viele dieser Abschnitte verwendet werden. Die übrigen Abschnitte werden dann entweder im Zeitmultiplex für andere Übertragungen verwendet, mit Leerinformation gefüllt oder nicht ausgenützt. Beispiele dafür sind der Mehrfachzugriff auf Fernmeldesatelliten im Time Devision Multiple Access (TDMA) oder in Breitbandnetzen der Asynchronous Transfer Mode (ATM).

Nachteile dieser Lösung sind die sich vor allem beim Funkverkehr auswirkende, auf die zeitliche Komprimierung zurückgehende höhere Störanfälligkeit, der in Funknetzen erforderliche höhere Aufwand für die Synchronisation, bei der auch unterschiedliche Laufzeiten zu berücksichtigen sind und die harte Begrenzung der Gesamtkapazität. Selbst unter Inkaufnahme einer verringerten Übertragungsqualität kann die Gesamtkapazität eines Übertragungsmediums nur unter sehr hohem Aufwand erhöht werden.

Aus dem Artikel 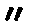 The Application of Code Division Multiplexing Techniques to Local Area Networks" von C.T. Spracklen und C. Smythe ist es bekannt, in einem LAN mit der Spreizbandtechnik zu arbeiten und je nach Anzahl der augenblicklich aktiven Knoten diesen dynamisch jeweils mehr oder weniger Bandbreite zuzuweisen. Diese Zuweisung von Bandbreite erfolgt durch Zuweisung von kürzeren oder längeren Codes. Der o. g. Artikel wurde auf den Seiten 767-770 der Proceedings der 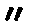 VLSI and Computers - First International Conference on Computer Technology, Systems and Applications - COMPEURO 87" veröffentlicht. Die Konferenz fand vom 11. - 15. Mai 1987 in Hamburg statt. Die Proceedings tragen unter anderem die IEEE Catalog Number 87CH2417-4.

Das Problem der Datenübertragung mit veränderlichem Verkehrsaufkommen wird gemäß der Erfindung gelöst durch ein Verfahren nach der Lehre des Anspruchs 1, einen Sender nach der Lehre des Anspruchs 14, einen Empfänger nach der Lehre des Anspruchs 15 und eine Leitstation nach der Lehre des Anspruchs 16.

Der Grundgedanke der Erfindung ist eine codierte zeitlich parallele Übertragung der Daten unter gleichzeitiger Verwendung von mehr oder weniger vielen, zueinander orthogonalen Codes.

Weitere Ausgestaltungen der Erfindung sind den Unteransprüchen zu entnehmen.

Ein bevorzugtes Ausführungsbeispiel ist ein gemischtes CDMA-TDMA-Funksystem, bei dem die Anzahl der einer Einzelstation zugeteilten Kanäle (Codemultiplex, CDMA) rahmenweise (TDMA) aufgrund von Anforderungen in vorangegangenen Rahmen neu geregelt wird.

Der Artikel 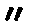 Multicarrier Modulation for Data Transmission: An Idea Whose Time Has Come" von John A.C. Bingham beschäftigt sich in grundlegender Weise mit der Aufteilung eines Datenstroms auf mehrere Kanäle. Dieser Artikel wurde veröffentlicht im IEEE Communications Magazine, Band 28, Heft 5 (Mai 1990), Seiten 5 - 14 (ausschließlich Seiten 9 und 10).

Auch die Verwendung eines Codes zum Zwecke der Modulation eines Signals sowie der darauf aufbauende Codemultiplex, bei dem mehrere verschiedene, zueinander orthogonale Codes zur Bildung von Kanälen verwendet werden, ist an sich bekannt. Der, auch zum Verständnis, einfachste Fall der Codemodulation ist der der Modulation eines Signals mit einem Binärcode. Dieser Fall kann als Abwandlung der Amplitudenmodulation und des darauf aufbauenden Frequenzmultiplex beschrieben werden. Bei der Amplitudenmodulation wird sendeseitig ein Basisbandsignal durch ein Trägersignal im Rhythmus der Trägerfrequenz periodisch umgepolt. Ein Synchrondemodulator auf der Empfangsseite polt nun dieses Signal phasenrichtig wieder im selben Rhythmus um, so daß wieder das ursprüngliche Basisbandsignal entsteht. Sind die Rhythmen (Frequenzen), mit denen sende- und empfangsseitig umgepolt wird, voneinander verschieden, so wird das ursprüngliche Signal nicht wiederhergestellt, es bleibt vielmehr ein Signal, das wegen des ständigen Umpolens im zeitlichen Mittel Null ist und durch Filter leicht entfernt werden kann. Es ist deshalb möglich und auch üblich, mehrere Basisbandsignale mit verschiedenen Trägerfrequenzen zu modulieren, über dasselbe Übertragungsmedium zu übertragen und empfangsseitig durch Synchrondemodulation und einfache Tiefpässe wieder zu trennen. (Häufig erfolgt allerdings die Trennung durch Bandpässe vor der Demodulation.)

Werden nun anstelle der periodischen Trägersignale verschiedene zueinander orthogonale Codesignale zum sendeseitigen und dazu synchronen empfangsseitigen Umpolen verwendet, so ändert sich prinzipiell nichts.

Zwei Codes sind dann zueinander orthogonal, wenn sie, nacheinander zum Umpolen desselben Signals verwendet, dieses völlig unterdrückt lassen. Als Beispiele solcher orthogonaler Digitalsignale sind Walshfunktionen und Rademacherfunktionen bekannt.

Insbesondere für den vorliegenden Zweck weist der Codemultiplex verschiedene Vorteile gegenüber dem Zeitmultiplex auf. Beim Codemultiplex sind die mit den verschiedenen Codes modulierten Signale ziemlich unabhängig voneinander. Eine gegenseitige Beeinflussung ergibt sich nur durch nichtideale Systemeigenschaften. Die einzelnen Codes brauchen nicht aufeinander synchronisiert zu sein, sofern neben der Eigenschaft der Orthogonalität auch die Eigenschaft der Unkorreliertheit gegeben ist, wenngleich eine solche Synchronisation sehr einfach möglich ist. Bei Verwendung verschiedener Codes durch verschiedene Stationen eines Funknetzes oder eines lokalen Netzes (LAN) brauchen die Laufzeiten nicht berücksichtigt zu werden. Bei vielen Zeitmultiplexsystemen müssen die nichtbenutzten Zeitabschnitte durch Leersignale aufgefüllt werden, beispielsweise um die Synchronisation zu erhalten. Jeder Code kann, sofern er im gegebenen Übertragungsmedium zugelassen ist, ohne weiteres hinzugefügt werden und reduziert allenfalls geringfügig die Übertragungsqualität bei den anderen. Die Obergrenze für die Übertragungskapazität eines Übertragungsmediums wird bestimmt durch die Anzahl von Codes, die einerseits zueinander orthogonal sind und andererseits im Übertragungsmedium übertragbar sind.

Die Codemodulation kann prinzipiell auch so erfolgen, daß nicht das Basisbandsignal durch das Codesignal umgepolt wird, sondern daß das Codesignal durch das Basisbandsignal ein- und ausgeschaltet wird oder daß durch das Basisbandsignal zwischen zwei Codesignalen umgeschaltet wird. Dies setzt voraus, daß das Basisbandsignal digital und nicht analog ist, was aber in der Regel ohnehin gegeben ist. Empfangsseitig muß dann geprüft werden, ob das Codesignal anliegt oder nicht bzw. welches der beiden in Frage kommenden Codesignale empfangen wird.

Die erste Art, bei der das Basisbandsignal durch das Codesignal umgepolt wird, ist als Spreizbandtechnik bekannt. Auch bei dieser Technik ist es möglich, durch das Basisbandsignal zwischen zwei Codesignalen umzuschalten, indem das invertierte Basisbandsignal durch ein zweites Codesignal umgepolt wird. Als Codesignale werden meist binäre Pseudozufallsfolgen mit großen, teils extrem langen Codelängen verwendet. Die Codesignale dienen dabei gleichzeitig der Verschlüsselung. Durch die teils extrem langen Codelängen (teilweise mit Laufzeiten in der Größenordnung eines Monats) ist selbst bei bekanntem Code die Synchronisation ohne Zusatzinformation unmöglich. Im hier vorliegenden Fall wird dagegen vorgeschlagen, alle Codes immer dann definiert zu starten, wenn infolge einer Veränderung des Verkehrsaufkommens die Anzahl der verwendeten Codes geändert wird. Im bevorzugten Fall, bei dem die Zuordnung der Codes immer für feste Zeitabschnitte erfolgt, sollte deren Länge gleich einem solchen Zeitabschnitt sein oder sich während eines solchen Zeitabschnitts vollständig wiederholen.

Wesentlich kürzere Codelängen sind dann angebracht, wenn durch das Basisbandsignal bitweise das Codesignal ein- oder umgeschaltet wird. Hier bietet es sich an, als Codesignal Sequenzen zu verwenden, deren Codelängen jeweils der Dauer eines Bits des Basisbandsignals entsprechen und die auch bezüglich des Bittaktes eine feste Phasenlage aufweisen.

Die physikalischen Eigenschaften sind in beiden Fällen im wesentlichen gleich, sofern nur der dem Codesignal zugrunde liegende Takt derselbe ist. Im letzten Fall ist eine Einsparung an Sendeleistung möglich.

Die Erfindung wird im folgenden anhand eines Ausführungsbeispiels weiter erläutert.

Auf der Sendeseite muß zunächst erkannt werden, wie hoch das aktuelle Verkehrsaufkommen ist. Dies kann beispielsweise mittels einer Meldeleitung und eines Meldesignals von der Datenquelle erfolgen. Bei veränderlichem Verkehrsaufkommen werden oft variable Pufferspeicher, z.B. Fifos, verwendet, in solchen Fällen zeigt der aktuelle Füllstand des Pufferspeichers das aktuelle Verkehrsaufkommen an. Auch eine laufende Messung der pro Zeiteinheit ankommenden Datenmenge gibt Aufschluß über das aktuelle Verkehrsaufkommen. Sowohl zum Zwecke der Vorhersage als auch zum Zwecke der Glättung des Verkehrsaufkommens kann in bekannter Weise aus nacheinander ermittelten Werten des Verkehrsaufkommens adaptiv ein aktueller Wert ermittelt werden.

Erfindungsgemäß wird nun das ermittelte aktuelle Verkehrsaufkommen zu einem vorgegebenen Bezugswert in Beziehung gesetzt und daraus ein Wert ermittelt, der die Anzahl gleichzeitig zu übertragender Daten angibt. Im Falle der Verwendung von Fifos als Pufferspeicher kann dieser Wert aus dem Füllstand durch Teilung gebildet werden.

Der gesamte Datenstrom wird nun entsprechend dem ermittelten Wert durch einen Demultiplexer in mehr oder weniger viele parallele Datenströme aufgeteilt. Als Demultiplexer kann ein üblicherweise auch als Demultiplexer bezeichnetes Bauelement verwendet werden, das einen Dateneingang und mehrere Datenausgänge aufweist, auf die durch Steuereingänge umgeschaltet werden kann. So können beispielsweise bei ATM fünf aufeinanderfolgende ATM-Zellen der Reihe nach auf fünf verschiedene Ausgänge durchgeschaltet und dort zwischengespeichert und dann gleichzeitig weiterverarbeitet werden. Auch eine bitweise Aufteilung durch einen als Demultiplexer wirkenden Serien-Parallel-Wandler (Schieberegister mit seriellem Eingang und parallelen Ausgängen) ist möglich. Entsprechend dem verwendeten Wert muß dann beispielsweise fünfmal nacheinander seriell je ein Bit eingegeben und dann einmal fünf Bit gleichzeitig parallel ausgegeben werden.

Die so parallelisierten Datenströme werden nun jeder für sich, aber gleichzeitig, entweder je durch eine eigene Codefolge umgetastet (moduliert) oder dazu verwendet, jeweils eine Codefolge ein und aus zu schalten oder zwischen zwei Codefolgen umzuschalten. Die hierfür erforderlichen Schalter, Umschalter, Mischer oder Multiplizierer sind allgemein bekannt.

Die in Frage kommenden Codesignale können entweder als solche abgespeichert oder auch in passend rückgekoppelten Schieberegistern in bekannter Weise laufend neu erzeugt werden. Ob immer alle möglichen Codesignale erzeugt oder aus Speichern ausgelesen werden oder nur die jeweils verwendeten, ist prinzipiell und auch praktisch von recht untergeordneter Bedeutung.

Praktisch sehr bedeutungsvoll ist die Synchronisation der einzelnen Codesignale untereinander. Eine solche Synchronsation ist zwar nicht absolut zwingend, sie erleichtert aber beispielsweise die empfangsseitige Synchronisation sehr. Ist nämlich bei sendeseitiger Synchronisation der Codesignale untereinander empfangsseitig die Synchronisation zu auch nur einem der Codesignale gewährleistet, so ist damit auch die Synchronisation zu jedem hinzukommenden Codesignal sofort gewährleistet. Die fehlende Synchronisation der Codesignale untereinander kann auch die Orthogonalität der Codes beeinträchtigen.

Die Synchronisation der Codes untereinander kann bei Verwendung rückgekoppelter Schieberegister, sofern sie gleiche Codelängen erzeugen, dadurch erfolgen, daß sie gleichzeitig von definierten Ausgangspunkten gestartet und mit einem gemeinsamen Takt betrieben werdne. Eine Synchronisation der Codes untereinander kann auch erreicht werden, indem diese beispielsweise in dynamischen RAMs (DRAM) derart abgelegt sind, daß unter jeder Adresse je ein Bit eines jeden Codes abgelegt ist. Ein DRAM mit der Dimension 2K x 8 vermag so acht Codes mit je 2048 Bit zu speichern. Bei jeder Inbetriebnahme müssen dabei allerdings die Codes erst in die DRAMs eingeschrieben werden, wozu sie beispielsweise aufgrund eines Algorithmus jeweils neu zu bilden sind.

Erfolgt die sendeseitige Aufbereitung programmgesteuert, beispielsweise mittels eines Signalprozessors, so ergibt sich die Synchronisation zwangsläufig, wenn sämtliche Funktionen im Zeitmultiplex von ein- und demselben Programm verwirklicht werden. Diese Funktionen sind vor allem die Codierung, aber auch die Demultiplexbildung und die Erzeugung der Codesignale.

Auch zwischen den Codesignalen und den zu übertragenden Signalen kann eine Synchronisation sinnvoll sein. Insbesondere ist anzustreben, den einem Codesignal zugrundeliegenden Takt als ganzes Vielfaches des Takts der zu übertragenden Signale zu wählen und diese Takte phasenstarr aneinander zu koppeln.

Es sei noch auf zwei besonders vorteilhafte Arten der Verkopplung von Codesignalen und zu übertragenden Signalen hingewiesen:
- Für den Fall, daß als Codesignale bestimmte Sequenzen verwendet werden, ist anzustreben, daß eine solche Sequenz jeweils genau mit einem Bit des zu übertragenden Signals zusammenfällt.
- Werden als Codesignale Pseudozufallsfolgen verwendet, so ist es sinnvoll, wenn eine solche Folge mit einem Block, beispielsweise einer ATM-Zelle, des zu übertragenden Signals zusammenfällt.

Bisher wurde stillschweigend unterstellt, daß das zu übertragende Signal ein Digitalsignal ist. Dies ist aber nicht zwingend vorauszusetzen. Grundsätzlich kann auch ein Analogsignal mit einem Codesignal multipliziert werden. Ein zeitdiskret abgetastetes Analogsignal kann auch, etwa unter Zuhilfenahme von Eimerkettenschaltungen (charge coupled devices), zur Bildung zeitlich parallel zu übertragender Teilsignale zwischengespeichert und zeitlich gedehnt werden. Als veränderliches Verkehrsaufkommen bei einem Analogsignal kann beispielsweise die Tatsache angesehen werden, daß bei analoger Übertragung von digitalen Signalen unter Zuhilfenahme von Modems bei diesen die Übertragungsgeschwindigkeit aufgrund sich ändernder Übertragungsqualität veränderbar ist. Durch Veränderung des Abtasttaktes kann eine Veränderung der Bandbreite erfolgen.

Ist nun das aktuelle Verkehrsaufkommen ermittelt, der Eingangsdatenstrom entsprechend in mehr oder weniger viele parallele Datenströme aufgeteilt und eine Multiplizierung der Datenströme mit Codesignalen erfolgt, so werden die resultierenden codierten Teil-Datenströme wieder zusammengefaßt. Diese Zusammenfassung erfolgt durch analoge Summation. An dieser Stelle können noch weitere, vom selben Sender über dasselbe Übertragungsmedium zu übertragende Datenströme hinzugefügt werden. Solche weiteren Datenströme können beispielsweise Signalisierungssignale sein, die zum selben Empfänger gesendet werden sollen oder auch in prinzipiell gleicher Weise aufbereitete vom ersten Datenstrom völlig unabhängige Datenströme, die auch für verschiedene Empfänger bestimmt sein können.

Um empfangsseitig wieder voneinander getrennt werden zu können, ist es natürlich erforderlich, daß alle Datenströme mit verschiedenen Codes codiert sind.

Als Übertragungsmedium kommt beispielsweise ein Funkkanal oder ein passives elektrisches oder optisches Übertragungsnetz in Frage.

Es ist nicht zwingend, daß alle einzelnen Datenströme mit derselben Amplitude und damit derselben Leistung, beides oft als Pegel bezeichnet, gesendet werden. Ein Signalisierungssignal, das möglicherweise mit einer reduzierten Taktfrequenz arbeitet, kann auch mit entsprechend reduzierter Amplitude hinzuaddiert und dennoch empfangseitig mit gleicher Qualität wiedergewonnen werden. Auch brauchen für verschiedene Empfänger bestimmte Datenströme nicht alle mit derselben Amplitude hinzuaddiert zu werden. Es genügt, daß jeder (Teil-)Datenstrom mit derjenigen Amplitude gesendet wird, mit der er noch korrekt empfangen werden kann.

Empfangsseitig sind nun mehrere Decodierer vorgesehen, die gleichzeitig das empfangsseitige Eingangssignal decodieren. Die Decodierung erfolgt, wie schon angedeutet, durch nochmalige Multiplikation mit dem sendeseitig verwendeten Codesignal und anschließende Filterung. Anschließend sind die decodierten Teil-Datenströme mittels eines Multiplexers wieder zum ursprünglichen Datenstrom zusammenzufassen. All diese Funktionen können, wie die entsprechenden sendeseitigen Funktionen, sowohl durch diskret aufgebaute Schaltungen als auch durch programmgesteuerte Verarbeitung verwirklicht werden.

Für jedes zu empfangende Teilsignal ist entweder ein aus Codesignalgenerator und Multiplizierer bestehender Decodierer vorzusehen oder zu gewährleisten, daß bei programmgesteuerter Verarbeitung entsprechend viele Decoderfunktionen verarbeitet werden können. Ist sichergestellt, daß einerseits nie alle Codes gleichzeitig verwendet werden können und andererseits immer im voraus bekannt ist, welche Codes gerade verwendet werden, so genügt es, wenn nur soviele Decoder realisiert oder Decoderfunktionen realisierbar sind, wie gleichzeitig Codes verwendet werden können. Sonst ist für jeden Code ein eigener Decoder vorzusehen.

Die Decodierung muß selbstverständlich codesynchron erfolgen, um die sendeseitige Codierung rückgängig zu machen. Geeignete Synchronisierschaltungen zur Synchronisation auf ein einzelnes Signal sind bekannt. Sind sendeseitig die einzelnen Codes zueinander synchron, so müssen sie auch empfangsseitig zueinander synchron sein (sofern sie sich physikalisch nicht so unterscheiden, daß sie sich im Übertragungsmedium unterschiedlich ausbreiten), und es genügt, wenn jeweils auf einen Code synchronisiert wird. Bei dem hier unterstellten veränderlichen Verkehrsaufkommen, das zur gleichzeitigen Verwendung von mehr oder weniger vielen Codes führt, genügt es, wenn eine Grundlast vorhanden ist, die gewährleistet, daß immer wenigstens ein Code zumindest intermittierend übertragen wird. Eine solche Grundlast kann auch durch Leerinformation gewährleistet werden. Wird ein Signalisierungssignal zusätzlich mit einem eigenen Code übertragen, so kann auch dieses zur Synchronisation herangezogen werden. Auch hier genügt es, wohl auch zur Signalisierung und nicht nur zur Synchronisation, wenn in regelmäßigen Abständen ein Signal übertragen wird.

Um die Teil-Datenströme anschließend in einem Multiplexer wieder in einen einzigen Datenstrom zusammenzufassen, ist es noch erforderlich, zu wissen, welche Codes aktuell verwendet werden und wie die einzelnen Teil-Datenströme wieder richtig zusammenzufügen sind. Das erforderliche Wissen kann jeweils durch Signalisierung ausgetauscht werden. Hinsichtlich der Ordnung der durch verschiedene Codes übertragenen Teil-Datenströme genügt auch eine einmalige Zuordnung. Welche Codes aktuell verwendet werden, kann auch aus dem empfangenen Signal ermittelt werden. Dazu muß dann für jeden Code ein Decoder aktiv sein und am Ausgang des Decoders festgestellt werden, ob ein Signal mit Informationsgehalt anliegt oder nicht. Die Teil-Datenströme müssen dann entsprechend ihrer Ordnung im nachfolgenden Multiplexer zusammengefaßt werden.

Zweckmäßigerweise erfolgt die Umschaltung zwischen mehr oder weniger vielen Teil-Datenströmen nicht zu beliebigen Zeitpunkten. Vorteilhaft ist vielmehr, wenn die gesamte Datenübertragung zeitlich in gleich lange aufeinanderfolgende Zeitabschnitte gegliedert wird und wenn die Anzahl der verwendeten Codes innerhalb eines solchen Zeitabschnitts unverändert ist.

Sinnvollerweise sind die Codes dann auch mit den Anfängen dieser Zeitabschnitte zu synchronisieren. Die Länge eines Zeitabschnitts sollte gleich der Lauflänge der Codes oder gleich einem ganzzahligen Vielfachen davon sein.

Wird, wie schon beschrieben, die Anzahl der verwendeten Codes und deren Auswahl aus dem Satz der zur Verfügung stehenden Codes zwischen den beteiligten Stationen durch Signalisierung festgelegt, so muß dies vor dem Zeitabschnitt ihrer Verwendung erfolgen. Dabei kann es sinnvoll sein, die verwendeten Codes grundsätzlich vor jedem Zeitabschnitt neu festzulegen oder nur dann neue Vereinbarungen zu treffen, wenn Veränderungen erforderlich sind.

Diese Festlegungen oder Vereinbarungen können mit oder ohne vorherige Bestätigung erfolgen. Es ist also möglich, im ersten Zeitabschnitt anzukündigen und im zweiten anzuwenden. Es ist aber auch möglich, im ersten Zeitabschnitt anzufordern, im zweiten zuzuteilen und erst im dritten Zeitabschnitt zu verwenden.

Außer der bereits erwähnten Außerband-Signalisierung, bei der durch Verwendung eines zusätzlichen Codes ein separater Signalisierungskanal geschaffen wird, kann auch eine Inband-Signalisierung derart geschaffen werden, daß die einzelnen Zeitabschnitte sowohl (kürzere) Unterabschnitte für Signalisierung als auch (längere) Unterabschnitte für Datenübertragung aufweisen. Die Aufteilung der Unterabschnitte untereinander kann variabel sein.

Das vorbeschriebene Verfahren ist schon dort vorteilhaft, wo nur ein Sender mit einem Empfänger über ein und dasselbe Übertragungsmedium in Verbindung steht. Es erweist sich aber dann als besonders vorteilhaft, wenn mehrere Stationen über dasselbe Übertragungsmedium Daten austauschen. Solche Stationen sind insbesondere kombinierte Sende-Empfänger, aber auch einzelne Sender und einzelne Empfänger. Im einfachsten Fall teilen sich zwei Sende-Empfangs-Stationen das gemeinsame Übertragungsmedium und den vorgegebenen Satz von Codes, um miteinander Daten auszutauschen. Die bei einem gemeinsamen Übertragungsmedium immer erforderliche Richtungstrennung erfolgt hier durch Verwendung verschiedener Codes. Zwei solche Stationen arbeiten oft so, daß die eine mit hohem Verkehrsaufkommen Daten sendet und die andere mit niedrigem Verkehrsaufkommen Quittierungssignale zurückschickt und daß die beiden Stationen insoweit gegenseitig abwechseln.

Auch ein ganzes Netz von Stationen kann so arbeiten. Ein solches Netz kann beispielsweise ein Funknetz mit einer bestimmten Funkfrequenz als Übertragungsmedium sein oder ein sogenanntes Local-Area-Network, bei dem mehrere Stationen beispielsweise über einen geschlossenen Ring untereinander Daten austauschen. Bekannte Betriebsweisen solcher Netze sind Zeitmultiplexverfahren, bei denen je nach Bedarf mehr oder weniger viele Zeitschlitze zugeteilt werden. Für die Vergabe dieser Zeitschlitze sind sehr viele Möglichkeiten bekannt, die sich alle mehr oder weniger auch auf die bei der vorliegenden Erfindung erforderlichen Vergabe von Codes anwenden lassen.

Eine grundsätzliche Möglichkeit besteht darin, daß eine Station als Leitstation, Master oder Base Station, arbeitet, an die die Anforderungen nach Übertragungskapazität, hier Codes, gerichtet werden und die dann aufgrund der Anforderungen die Codes zuweist. Eine weitere grundsätzliche Möglichkeit ist eine dezentral gesteuerte Kapazitätsvergabe aufgrund einer allen Stationen bekannten Vergabeprozedur und aufgrund von an alle Stationen gerichteten oder zumindest allen Stationen zugänglichen Anforderungen. Ein Beispiel für die dezentrale Kapazitätsvergabe ist in der DE-OS 33 13 841 beschrieben.

Die für die Verteilung der Codes erforderliche Signalisierung kann wie oben beschrieben erfolgen. Bei Verwendung einer Inband-Signalisierung besteht sowohl die schon erwähnte Möglichkeit, jeden Zeitabschnitt in Unterabschnitte für Signalisierung und Unterabschnitte für Datenübertragung zu unterteilen, als auch die Möglichkeit, ausschließlich der Signalisierung dienende Zeitabschnitte einzuschieben.

Eine Außerband-Signalisierung unter Verwendung separater Codes kann durch eine zeitliche Aufteilung des Signalisierungs-Code-Kanals auf die einzelnen Stationen erfolgen. Es ist auch möglich, anstelle eines einzigen Signalisierungs-Codes für alle Stationen jeder Station einen eigenen Code zuzuordnen und so Teilkanäle zu bilden. In diesem Fall laufen dann die Signalisierungen aller Stationen zeitlich parallel. Die Übertragungsgeschwindigkeiten der Signalisierungskanäle, der Bittakt der Signalisierungs-Codes und auch die Pegel in diesen Kanälen können so deutlich reduziert werden, ohne daß die Übertragungsqualität leidet. Erforderlich hierzu ist allerdings eine weitere Anzahl von Codes, die jeweils untereinander und auch bezüglich aller übrigen Codes orthogonal sein müssen.

## Patentansprüche

1. Verfahren zur Übertragung eines Datenstroms mit zeitlich veränderlichem Verkehrsaufkommen zwischen einem Sender und einem Empfänger, **dadurch gekennzeichnet, daß** jeweils ein bestimmter Zeitabschnitt des zu übertragenden Datenstroms in Teile aufgeteilt wird, deren Anzahl vom aktuellen Verkehrsaufkommen abhängt und die jeweils eine vorgegebene Anzahl von Daten enthalten und daß die verschiedenen Teile mit verschiedenen, zueinander orthogonalen Codes codiert, gleichzeitig über dasselbe Übertragungsmedium übertragen und anschließend wieder zum Ganzen zusammengefaßt werden.

2. Verfahren nach Anspruch 1, dadurch gekennzeichnet, daß die verschiedenen Codes eine feste Ordnung aufweisen, durch die beim Aufteilen und Zusammenfassen eine eindeutige Beziehung zwischen den Teilen und dem Ganzen hergestellt wird.

3. Verfahren nach Anspruch 1, dadurch gekennzeichnet, daß die Datenübertragung zeitlich in gleich lange aufeinanderfolgende Zeitabschnitte gegliedert wird und daß die Anzahl der verwendeten Codes innerhalb eines Zeitabschnittes unverändert ist.

4. Verfahren nach Anspruch 3, dadurch gekennzeichnet, daß alle verwendeten Codes untereinander und mit den Anfängen der Zeitabschnitte synchronisiert sind.

5. Verfahren nach Anspruch 3, dadurch gekennzeichnet, daß bei mehreren beteiligten Stationen, welche teils nur als Sender, teils nur als Empfänger oder teils als beides ausgebildet sind, die Anzahl der verwendeten Codes und deren Auswahl zwischen den beteiligten Stationen vor dem Zeitabschnitt ihrer Verwendung durch entsprechende Signalisierung vereinbart wird.

6. Verfahren nach Anspruch 5, dadurch gekennzeichnet, daß die verwendeten Codes vor jedem Zeitabschnitt neu vereinbart werden.

7. Verfahren nach Anspruch 5, dadurch gekennzeichnet, daß nur bei Veränderungen neue Vereinbarungen erfolgen.

8. Verfahren nach Anspruch 5, dadurch gekennzeichnet, daß die Zeitabschnitte Unterabschnitte für Signalisierung und Unterabschnitte für Datenübertragung aufweisen.

9. Verfahren nach Anspruch 5, dadurch gekennzeichnet, daß Signalisierung und Datenübertragung mit getrennten Codes erfolgen.

10. Verfahren nach Anspruch 1, dadurch gekennzeichnet, daß sich mehrere Stationen, welche teils nur als Sender, teils nur als Empfänger oder teils als beides ausgebildet sind, dasselbe Übertragungsmedium und einen vorgegebenen Satz von Codes teilen und daß die Zuweisung der Codes an die einzelnen Stationen entsprechend deren jeweiligem Verkehrsaufkommen erfolgt.

11. Verfahren nach Anspruch 10 zur Durchführung in einem System, in dem mehrere Stationen unter organisatorischer Führung einer einen Empfänger und einen Sender aufweisenden Leitstation Datenströme austauschen, dadurch gekennzeichnet, daß Anforderungen von Codes nur an die Leitstation erfolgen und daß Zuweisungen von Codes nur durch die Leitstation erfolgen.

12. Verfahren nach Anspruch 10, dadurch gekennzeichnet, daß die Vergabe der Codes dezentral aufgrund einer allen Stationen bekannten Vergabeprozedur und aufgrund von an alle Stationen gerichteten Anforderungen erfolgt.

13. Verfahren nach Anspruch 1, dadurch gekennzeichnet, daß die Pegel, mit denen die verschiedenen Teil-Datenmengen übertragen werden, getrennt festgelegt werden.

14. Sender für ein System zur Übertragung eines Datenstroms mit zeitlich veränderlichem Verkehrsaufkommen zwischen einem Sender und einem Empfänger, **dadurch gekennzeichnet, daß** im Sender ein Demultiplexer vorhanden ist zur Aufteilung jeweils eines bestimmten Zeitabschnitts des Datenstroms in Teile, deren Anzahl vom aktuellen Verkehrsaufkommen abhängt und die jeweils eine vorgegebene Anzahl von Daten enthalten, daß Codierer vorhanden sind, durch die die verschiedenen Teile mit verschiedenen, zueinander orthogonalen Codes codiert werden und daß Mittel vorhanden sind, um die verschieden codierten Teile gleichzeitig über dasselbe Übertragungsmedium zu senden.

15. Empfänger für ein System zur Übertragung eines Datenstroms mit zeitlich veränderlichem Verkehrsaufkommen zwischen einem Sender und einem Empfänger, **dadurch gekennzeichnet, daß** im Empfänger mehrere Decodierer vorhanden sind, die mit verschiedenen, zueinander orthogonalen Codes arbeiten und die mehrere gleichzeitig über dasselbe Übertragungsmedium empfangene Signale decodieren und daß ein Multiplexer vorhanden ist, der die von den verschiedenen Decodierern decodierten Informationen, sofern sie Nutzinformation darstellen, zu einem Ganzen zusammenfaßt.

16. Leitstation zur Koordinierung mehrerer Sender für ein System zur Übertragung eines Datenstroms mit zeitlich veränderlichem Verkehrsaufkommen zwischen einem Sender und einem Empfänger, in denen je ein Demultiplexer vorhanden ist zur Aufteilung jeweils eines bestimmten Zeitabschnitts des Datenstroms in Teile, deren Anzahl vom aktuellen Verkehrsaufkommen abhängt und die jeweils eine vorgegebene Anzahl von Daten enthalten, in denen Codierer vorhanden sind, durch die die verschiedenen Teile mit verschiedenen, zueinander orthogonalen Codes codiert werden und in denen Mittel vorhanden sind, um die verschieden codierten Teile gleichzeitig über dasselbe Übertragungsmedium zu senden und mehrerer Empfänger für das System zur Übertragung eines Datenstroms mit zeitlich veränderlichem Verkehrsaufkommen zwischen einem Sender und einem Empfänger, in denen jeweils mehrere Decodierer vorhanden sind, die mit verschiedenen, zueinander orthogonalen Codes arbeiten und die mehrere gleichzeitig über dasselbe Übertragungsmedium empfangene Signale decodieren und die einen Multiplexer enthalten, der die von den verschiedenen Decodierern decodierten Informationen, sofern sie Nutzinformation darstellen, zu einem Ganzen zusammenfaßt, **dadurch gekennzeichnet, daß** die Leitstation einen Empfänger aufweist, um Anforderungen der verschiedenen Sender bezüglich einer gewünschten Anzahl von verschiedenen, zueinander orthogonalen Codes entgegenzunehmen, daß sie Mittel aufweist, um über die Zuweisung von Codes zu entscheiden und daß sie einen Sender aufweist, um eine Anzahl von verschiedenen, zueinander orthogonalen Codes den verschiedenen Sendern und Empfängern zuzuweisen.

## Claims

1. A process for transmitting a data stream with a time-variable traffic volume between a transmitter and a receiver, characterised in that a specified time section of the data stream to be transmitted is in each case subdivided into parts, the number of which is dependent upon the instantaneous traffic volume and which each contain a predetermined number of data items, and that the different parts are coded with different, mutually orthogonal codes, are transmitted simultaneously via the same transmission medium, and are then recombined to form a whole.

2. A process according to Claim 1, characterised in that the different codes have a fixed order by means of which a clearly defined relationship between the parts and the whole is established during the subdivision and the recombination.

3. A process according to Claim 1, characterised in that the data transmission is subdivided in time into consecutive time sections of equal length and that the number of codes used within a time section is unchanged.

4. A process according to Claim 3, characterised in that all the codes used are synchronised with one another and with the beginnings of the time sections.

5. A process according to Claim 3, characterised in that in the case of a plurality of participating stations, which are designed in part only as transmitters, in part only as receivers or in part as both transmitters and receivers, the number of codes used, and their selection among the participating stations, are specified by appropriate signalling prior to the time section in which said codes are used.

6. A process according to Claim 5, characterised in that the codes used are re-specified prior to each time section.

7. A process according to Claim 5, characterised in that new specifications are made only in the event of changes.

8. A process according to Claim 5, characterised in that the time sections comprise sub-sections for signalling and sub-sections for data transmission.

9. A process according to Claim 5, characterised in that signalling and data transmission take place using separate codes.

10. A process according to Claim 1, characterised in that a plurality of stations, which are designed in part only as transmitters, in part only as receivers, or in part both as transmitters and receivers, share the same transmission medium and a given set of codes, and that the allocation of the codes to the individual stations takes place in accordance with the particular volume of traffic of said stations.

11. A process according to Claim 10 for implementation in a system in which a plurality of stations exchange data streams under the organisational control of a control station comprising a receiver and a transmitter, characterised in that requests for codes are made only to the control station and that allocations of codes are made only by the control station.

12. A process according to Claim 10, characterised in that the allocation of the codes takes place decentrally on the basis of an allocation procedure known to all the stations and on the basis of requests directed to all the stations.

13. A process according to Claim 1, characterised in that the levels with which the different partial data quantities are transmitted are separately specified.

14. A transmitter for a system for transmitting a data stream with a time-variable traffic volume between a transmitter and a receiver, characterised in that in the transmitter a demultiplexer is provided, which in each case divides a specified time section of the data stream into parts, the number of which is dependent upon the instantaneous traffic volume and which each contain a predetermined number of data items, that coders are provided, by means of which the different parts are coded with different, mutually orthogonal codes, and that means are provided for transmitting the differently coded parts simultaneously via the same transmission medium.

15. A receiver for a system for transmitting a data stream with a time-variable traffic volume between a transmitter and a receiver, characterised in that in the receiver a plurality of decoders are provided, which operate with different, mutually orthogonal codes and which decode a plurality of signals received simultaneously via the same transmission medium, and that a multiplexer is provided which combines the data items decoded by the various decoders, where said data items represent useful information, to form a whole.

16. A control station for coordinating a plurality of transmitters for a system for transmitting a data stream with a time-variable traffic volume between a transmitter and a receiver, in each of which transmitters there is provided a demultiplexer, which in each case subdivides a specified time section of the data stream into parts, the number of which is dependent upon the instantaneous traffic volume and which each contain a predetermined number of data items, and in which coders are provided by which the different parts are coded with different, mutually orthogonal codes, and in which means are provided for transmitting the differently coded parts simultaneously via the same transmission medium, and for coordinating a plurality of receivers for the system for transmitting a data stream with a time-variable traffic volume between a transmitter and a receiver, in each of which receivers a plurality of decoders are provided, which operate with different, mutually orthogonal codes and which decode a plurality of signals received simultaneously via the same transmission medium, and which comprise a multiplexer which combines the data items decoded by the various decoders, where said data items represent useful information, to form a whole, characterized in that the control station comprises a receiver for receiving requests from the different transmitters for a required number of different, mutually orthogonal codes, and that it comprises means for making decisions about the allocation of codes, and that it comprises a transmitter for allocating a number of different, mutually orthogonal codes to the various transmitters and receivers.

## Revendications

1. Méthode de transmission d'un flux de données avec une intensité de trafic variable dans le temps, entre un émetteur et un récepteur, caractérisée en ce qu'un intervalle de temps déterminé du flux de données à, transmettre est respectivement réparti en éléments dont le nombre dépend de l'intensité momentanée de trafic et qui contiennent respectivement un nombre prédéfini de données et en ce que les différents éléments sont codés avec des codes différents orthogonaux les uns par rapport aux autres, sont transmis en même temps par l'intermédiaire du même moyen de transmission et sont ensuite regroupés pour former une unité.

2. Méthode selon la revendication 1, caractérisée en ce que les différents codes présentent un ordre fixe qui, lors de la répartition et du regroupement, permet de réaliser une relation univoque entre les éléments et l'unité.

3. Méthode selon la revendication 1, caractérisée en ce que la transmission de données est articulée dans le temps en intervalles successifs de même longueur et en ce que le nombre de codes utilisés dans un intervalle de temps est invariable.

4. Méthode selon la revendication 3, caractérisée en ce que tous les codes utilisés sont synchronisés entre eux et avec les débuts des intervalles de temps.

5. Méthode selon la revendication 3, caractérisée en ce que, dans le cas de plusieurs stations participantes qui sont réalisées en partie uniquement en tant qu'émetteur, en partie uniquement en tant que récepteur ou en partie en tant qu'émetteur et récepteur, le nombre de codes utilisés et leur choix entre les stations participantes sont convenus avant l'intervalle de temps de leur utilisation et par une signalisation correspondante.

6. Méthode selon la revendication 5, caractérisée en ce que les codes utilisés sont redéfinis avant chaque intervalle de temps.

7. Méthode selon la revendication 5, caractérisée en ce que de nouveaux accords sont pris uniquement en cas de modifications.

8. Méthode selon la revendication 5, caractérisée en ce que les intervalles de temps présentent des sous-intervalles pour la signalisation et des sous-intervalles pour la transmission de données.

9. Méthode selon la revendication 5, caractérisée en ce que la signalisation et la transmission de données ont lieu avec des codes séparés.

10. Méthode selon la revendication 1, caractérisée en ce que plusieurs stations qui sont réalisées en partie uniquement comme émetteur, en partie uniquement comme récepteur ou en partie comme émetteur et récepteur, se partagent le même moyen de transmission et un enregistrement prédéfini de codes et en ce que l'affectation des codes aux stations individuelles a lieu conformément à leur intensité respective de trafic.

11. Méthode selon la revendication 10 pour l'exécution dans un système dans lequel plusieurs stations échangent des flux de données sous la direction organisationnelle d'une station centrale présentant un récepteur et un émetteur, caractérisée en ce que les demandes de codes ne sont faites qu'à la station centrale et que les affectations de codes ne sont réalisées que par la station centrale.

12. Méthode selon la revendication 10, caractérisée en ce que l'attribution des codes a lieu de façon décentralisée sur la base d'une procédure d'attribution connue de toutes les stations et sur la base des demandes adressées à toutes les stations.

13. Méthode selon la revendication 1, caractérisée en ce que les niveaux auxquels les différentes quantités partielles de données sont transmises, sont définis séparément.

14. Emetteur pour un système de transmission d'un flux de données avec une intensité de trafic variable dans le temps entre un émetteur et un récepteur, caractérisé en ce que dans l'émetteur, il est prévu un démultiplexeur pour la répartition respectivement d'un intervalle de temps déterminé du flux de données en éléments dont le nombre dépend de l'intensité momentanée de trafic et qui comprennent respectivement un nombre prédéfini de données de telle sorte qu'il est prévu des codeurs qui permettent de coder les différents éléments avec différents codes orthogonaux les uns par rapport aux autres et en ce que des moyens sont prévus pour envoyer en même temps les différents éléments codés, par l'intermédiaire du même moyen de transmission.

15. Récepteur pour un système de transmission d'un flux de données avec une intensité de trafic variable dans le temps entre un émetteur et un récepteur, caractérisé en ce que dans le récepteur, il est prévu plusieurs décodeurs qui fonctionnent avec différents codes orthogonaux les uns par rapport aux autres et qui décodent plusieurs signaux reçus en même temps, par l'intermédiaire du même moyen de transmission et en ce qu'il est prévu un multiplexeur qui regroupe en une unité les informations décodées par les différents décodeurs, dans la mesure où lesdites informations représentent une information utile.

16. Station centrale pour la coordination de plusieurs émetteurs pour un système de transmission d'un flux de données avec une intensité de trafic variable dans le temps, entre un émetteur et un récepteur dans lesquels il est prévu respectivement un démultiplexeur pour la répartition ou un intervalle de temps déterminé du flux de données, en éléments dont le nombre dépend de l'intensité de trafic momentanée et qui comprennent respectivement un nombre prédéfini de données dans lesquelles il est prévu des codeurs qui permettent de coder les différents éléments avec différents codes orthogonaux les uns par rapport aux autres et dans lesquels sont disposés des moyens pour envoyer en même temps les différents éléments codés, par l'intermédiaire du même moyen de transmission, et de plusieurs récepteurs pour le système de transmission d'un flux de données avec une intensité de trafic variable dans le temps entre un émetteur et un récepteur, dans lesquels sont prévus respectivement plusieurs décodeurs qui fonctionnent avec différents codes orthogonaux les uns par rapport aux autres, qui décodent plusieurs signaux reçus en même temps, par l'intermédiaire du même moyen de transmission et qui comportent un multiplexeur qui regroupe en une unité les informations décodées par les différents décodeurs dans la mesure où lesdites informations représentent une information utile, caractérisée en ce que la station centrale présente un récepteur pour recevoir les demandes des différents émetteurs en ce qui concerne un nombre souhaité de différents codes orthogonaux les uns par rapport aux autres, en ce qu'elle présente des moyens pour décider de l'attribution des codes et en ce qu'elle présente un émetteur pour attribuer aux différents émetteurs et récepteurs, un nombre de codes différents, orthogonaux les uns par rapport aux autres.
